# EUROPÄISCHE PATENTSCHRIFT

(11) **EP 1 537 935 B1**
(45) Veröffentlichungstag und Bekanntmachung des Hinweises auf die Patenterteilung: **29.09.2010**
(21) Anmeldenummer: 04028641.1
(22) Anmeldetag: 03.12.2004
(51) Int. Cl.: B23H 7/20, B23H 9/00

(54) **Erosions-Anlage zur formgebenden Bearbeitung eines metallischen Struktur-Bauteils oder eines metallischen Einsatz-Elementes in einem Struktur-Bauteil sowie Erosions-Verfahren**
Electro-erosion machining apparatus for shape machining metallic structural elements or an insert in a structural element and method for electro-erosion machining.
Machine d'usinage par électroérosion pour former des pièces structurelles métalliques ou des inserts dans des éléments structurels et méthode d'usinage par électroérosion.

(30) Priorität: 03.12.2003 DE 10356394
(43) Veröffentlichungstag der Anmeldung: 08.06.2005
(73) Patentinhaber: EADS Deutschland GmbH, 85521 Ottobrunn (DE)
(72) Erfinder: Bermann, Johann, 85126 Münchsmünster (DE); Meister, Titus, 84048 Mainburg (DE)

(56) Entgegenhaltungen:
- DE-A1- 10 135 587
- GB-A- 2 323 551
- US-A- 4 628 172
- PATENT ABSTRACTS OF JAPAN Bd. 011, Nr. 034 (M-558), 31. Januar 1987 (1987-01-31) & JP 61 203224 A (INOUE JAPAX RES INC), 9. September 1986 (1986-09-09)

## Beschreibung

Die Erfindung betrifft eine Erosions-Anlage zur formgebenden Bearbeitung eines metallischen Struktur-Bauteils oder Einsatz-Elementes sowie ein Verfahren zur Erodierung derartiger Elemente oder Bauteile mit einer Erosions-Anlage. Diese Bearbeitung kann die Bearbeitung eines metallischen Struktur-Bauteils umfassen oder die Bearbeitung eines metallischen Einsatz-Elementes in einem nicht-metallischen Struktur-Bauteil oder die Bearbeitung eines in einem metallischen Struktur-Bauteil isoliert gesetzten metallischen Einsatz-Elementes umfassen. Bei den beiden letzt-genannten Alternativen ist insbesondere das Entfernen von metallischen Verbindungselementen aus Struktur-Bauteilen betroffen.

Aus dem allgemeinen Stand der Technik sind Erosions-Verfahren bekannt, mit denen formgebend Struktur-Bauteile mittels einer Elektrode bearbeitet werden. Bei diesen Verfahren wird das Material in der Umgebung der Erosions-Prozesse beeinträchtigt. Aus diesem Grund sind bisherige Verfahren nicht anwendbar auf Bauteile oder Struktur-Komponenten, deren Material-Eigenschaften sich durch den Erosions-Prozess unzulässig verändern können.

Zum Entfernen von Verbindungselementen aus Struktur-Bauteilen wurden bisher Kernloch-Bohrer eingesetzt, die das zu entfernende Verbindungselement, z.B. den Niet, zentrisch zerspanen. Ein Nachteil dieses Bohrverfahrens ist, dass Strukturteile, die durch die Verbindungselemente zusammengehalten werden, beschädigt werden können. Dies ist insbesondere dann der Fall, wenn Nieten zu entfernen sind, da diese bis zu der zwischen dem Nietkopf und dem Niethals liegenden Übergangsstelle ausgebohrt werden müssen und an dieser Stelle die mit dem Niet verbundenen Strukturteile anliegen.

Insbesondere im Flugzeugbau werden an nur einseitig zugänglichen Stellen Verbundnieten mit hochfesten Ziehdornen eingesetzt. Dadurch liegt gerade im Zentrum des Nietes ein sehr hartes Material vor, wodurch sich beim Entfernen von Verbindungselementen nach dem Stand der Technik folgende weitere Probleme ergeben: Die Qualität der Zentrierung, d.h. die Genauigkeit, mit der die Bohrmaschine angesetzt wird, hängt von der manuellen Geschicklichkeit des Handwerkers ab, wodurch sich jedoch ein Streubereich mit relativ ungenauen Zentrierungen ergibt. Ausserdem verschleisst das Werkzeug, d.h. der Bohrer, besonders stark an Ziehnieten in Abhängigkeit des ausgeübten Anpressdruckes. Ein weiterer Nachteil ist eine mögliche Wärmeentwicklung, die insbesondere dann entsteht, wenn die Schneidwirkung des Bohrers durch Abnutzung stark nachlässt oder der Niet mit dem Werkzeug mitdreht, wodurch erhöhte Reibungswärme entsteht und dadurch eine Schädigung der Struktur (Gefügeveränderung) eintreten kann.

Aus diesen Gründen eignet sich dieses Bohrverfahren nur eingeschränkt zum Entfernen von Verbundnieten mit Ziehdornen.

Aus DE 101 35 587 A1 ist eine Erosions-Anlage gemäß dem Oberbegriff des Patentanspruchs 1 bekannt.

Die Aufgabe der Erfindung ist es, in der aus dem Stand der Technik bekannte Erosions-Anlage den Stromfluss des Erodierstroms in das Verbindungselement zu verbessern.

Diese Aufgabe wird mit den Merkmalen des unabhängigen Ansprüchs gelöst. Weitere Ausführungsformen sind in den auf diese rückbezogenen Unteransprüchen angegeben.

Erfindungsgemäß ist eine Erosions-Anlage zur formgebenden Bearbeitung eines metallischen Struktur-Bauteils oder eines metallischen Einsatz- oder Verbindungs-Elementes mittels Erosion vorgesehen, die einen Bohrkopf mit einer Elektrode, eine Erosion-Energieversorgung und eine Erosions-Steuerung zur Erzeugung eines Erosionsstroms zur Erosion des Struktur-Bauteils bzw. des Einsatz- oder Verbindungs-Elementes aufweist. An dem Erodierkopf ist eine Masseanschluss-Einrichtung mit mehreren Massekontakt-Elementen angeordnet, das bei einer Positionierung des Erodierkopfes für den Erosions-Prozess in Kontaktverbindung mit der Oberseite des Struktur-Bauteils bzw. des Einsatz- oder Verbindungs-Elementes gebracht werden kann, um einen Erodier-Stromkreis über Rohr-Elektrode und das zu erodierende Verbindungselement herzustellen. Ein Mechanismus kann vorgesehen sein, durch den die freien Kontaktenden der mehreren Massekontakt-Elemente entgegen einer Federkraft einfahrbar sind.

Ein Vorteil der erfindungsgemäßen Erosions-Anlage mit der Masseanschluss-Einrichtung bzw. des erfindungsgemäßen Verfahrens liegt darin, dass mit dieser bzw. mit diesem eine Reduzierung von Prozess-Zeiten sowie eine Verringerung des Werkzeug-Verschleißes aufgrund einer Verbesserung des Stromflusses erreichbar ist. Durch die erfindungsgemäße Lösung können die Prozess-Parameter besser ermittelt und kontrolliert werden. Außerdem wird durch die räumliche Einschränkung des Stromflusses erreicht, dass sich das daraus resultierende elektrische Feld kompakter gestaltet, so dass das Störverhalten der Erosions-Anlage nach innen und außen verringert wird.

Die erfindungsgemäße Lösung ermöglicht z.B. das Einbringen von exakten Bohrungen oder Ausbrüchen, ohne dass das Materialgefüge in der Umgebung verändert wird.

Die Verwendung eines Spülkäfigs ist bei der Bearbeitung von metallischen Struktur-Bauteilen und von metallischen Einsatz-Elementen, wie z.B. Verbindungs-Elementen oder Einsatz-Elemente wie Einsatz-Hülsen, in nicht-metallischen Struktur-Bauteilen vorzusehen. Die erfindungsgemäße Lösung mit der Masseanschluss-Einrichtung ermöglicht die gezielte Bearbeitung der Verbindungs-Elemente für vielfältige Anwendungsfälle. Besonders vorteilhaft ist die erfindungsgemäße Lösung mit der Masseanschluss-Einrichtung bei der Bearbeitung von metallischen Verbindungs-Elementen, die mit nicht-metallischen Dichtmitteln, wie z.B. Dichtringen oder Dichtmassen, in ebenfalls metallischen Struktur-Bauteilen zu Isolations- oder Abdichtungs-Zwecken eingebracht sind.

Im folgenden wird die Erfindung anhand der beiliegenden Figuren beschrieben, die zeigen:
- Fig. 1 einen schematischen Überblick über die Hauptfunktionen oder Hauptbestandteile der erfindungsgemäßen Erosions-Anlage mit einer optional verwendbaren Positionierungs-Einrichtung,
- Fig. 2 eine Darstellung der Bewegungsrichtungen, die von der optional verwendbaren Positionierungs-Einrichtung zur Positionierung der Erosions-Anlage in Bezug auf Positionen von Verbindungselementen in einem Werkstück zur Verfügung gestellt werden,
- Fig. 3 ein Funktionsschema der Erosions-Anlage,
- Fig. 4a einen Axialschnitt durch eine Ausführungsform der erfindungsgemäßen Erosions-Anlage mit einem Bohrkopf, einer Darstellung des elektrischen Strom-Kreislaufes sowie einem zur Bearbeitung mit der Erosions-Anlage vorgesehenen Verbindungselement und einem Teil der durch dieses verbundenen Strukturteile;
- Fig. 4b eine Draufsicht auf einen zu erodierenden Nietkopf in einer Bauteil-Umgebung;
- Figur 5 eine Schnittdarstellung des vorderen Teils einer Ausführungsform des Bohrkopfes mit einer Bohr-Elektrode und einer Ausführungsform der erfindungsgemäßen Masseanschluss-Einrichtung;
- Figur 6 eine Vorder-Ansicht des Bohrkopfes der Figur 5.

Im folgenden wird eine erfindungsgemäße Erosions-Anlage unter der Verwendung eines entsprechenden Spülkäfigs beschrieben, die für den Anwendungsfall einer formgebenden Bearbeitung eines metallischen Struktur-Bauteils oder eines metallischen Einsatz-Elementes in einem nicht-metallischen Struktur-Bauteil, insbesondere zum Entfernen von metallischen Verbindungselementen vorgesehen ist, sowie ein entsprechendes Verfahren zur Erodierung derartiger Elemente oder Bauteile mit einer Erosions-Anlage.

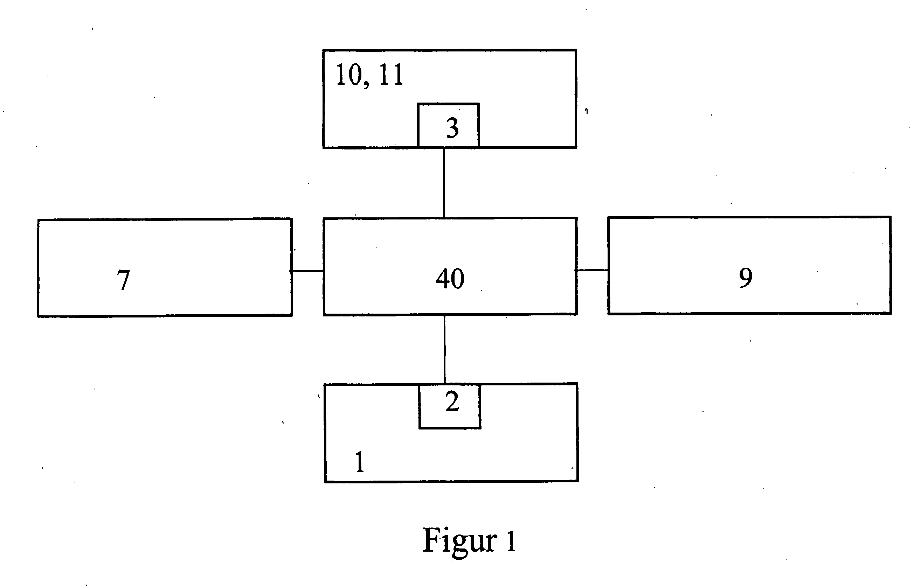

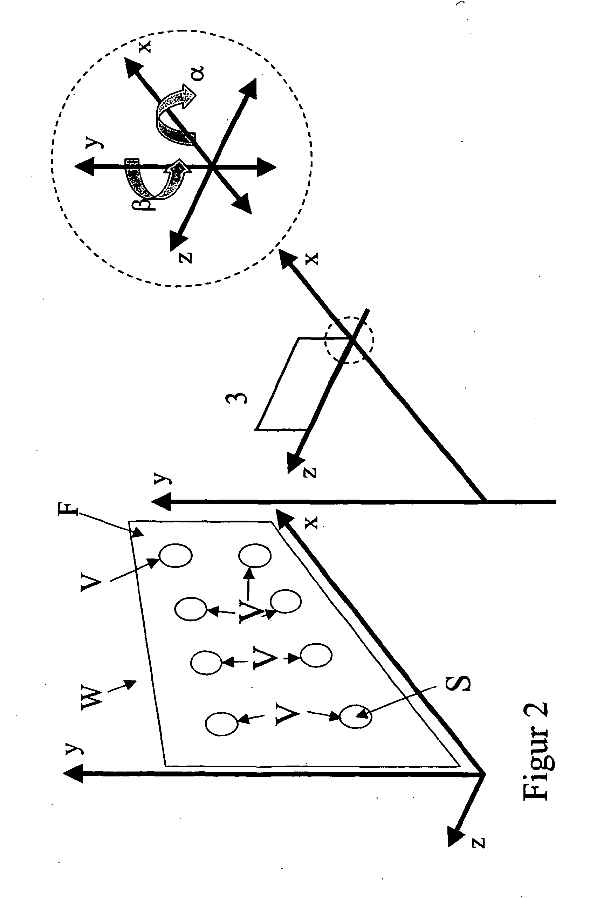

Die erfindungsgemäße Erosions-Anlage F (Fig. 1) zur Entfernung von metallischen Verbindungselementen umfasst vorzugsweise eine Positionierungs-Anlage 1 mit einer Positions-Steuerung 2. Die Positionierungs-Anlage 1 ist dazu vorgesehen, einen Erodierkopf 3 mit einem Bohrkopf 4 und einem Spülkäfig 17 mit entsprechenden elektrischen Komponenten vor dem Starten des Erosions-Prozesses in Bezug auf ein von einem Werkstück W zu lösendes Verbindungselement V zu positionieren (Figur 2). Die dem Bohrkopf 4 zugewandte Struktur- oder Bauteil-Oberfläche ist in der Figur 2 mit dem Bezugszeichen F und die dem Bohrkopf 4 zugewandte Oberfläche des Verbindungselements V ist mit dem Bezugszeichen S bezeichnet. Der Bohrkopf 4, der von einem Bohrkopf-Träger 4a getragen ist, ist mittels der Positionierungs-Anlage 1 vorzugsweise in drei translatorischen und zwei rotatorischen Bewegungsrichtungen, also in insgesamt fünf Freiheitsgraden, beweglich.

Für den eigentlichen Erosions-Prozess ist eine Zustell-Einheit 15 zur Ausführung von Zustellbewegungen des Bohrkopfes 4 insbesondere in der axialen Richtung des Verbindungselementes V oder auch in einer oder mehreren Drehrichtungen zur Verfügung zu stellen. Dies kann mit einer einheitlichen BewegungsEinrichtung oder mit unterschiedlichen Bewegungs-Mimiken realisiert sein.

Die dargestellte Ausführungsform der Positionierungs-Anlage 1 für eine Erosions-Anlage F ist als Flächenportal gestaltet, um eine Positionierung des Erodierkopfes 3 bzw. des Bohrkopfes 4 vor dem Erodierprozess mit einer ausreichenden Genauigkeit sicherstellen zu können. Die Positionierungs-Anlage 1 kann auch als Roboter realisiert sein. In einer alternativen Ausführungsform kann eine Positionierungs-Anlage 1 auch die Zustelleinheit 15 ersetzen. Umgekehrt kann die Positionierungs-Anlage auch durch die Zustelleinheit 15 ersetzt werden. Vorteilhafterweise weist die Positionierungs-Anlage 1 eine Bewegungsmimik mit einer x- und einer y- Linearachse auf, mit der der Bohrkopf 4 bzw. der Erodierkopf 3 parallel zur Werkstückfläche des Werkstücks oder der Substruktur W und insbesondere zum Kopf oder der Oberfläche S des zu entfernenden Verbindungselements V in der Substruktur W bewegt werden kann. Die Annäherung des Bohrkopfes 4 an das Werkstück W erfolgt vorzugsweise mittels Zustell-Einheit 15, die vorzugsweise lineare Zustellbewegungen ausführt und optional drehbar um x- und y- Achse des Portalsystems gelagert ist.

Die Positionierungs-Anlage 1 kann als ein Flächenportal mit zwei Linearachsen in der x- und der y-Richtung realisiert sein. Es können jedoch auch andere Positions-Einrichtungen nach dem Stand der Technik verwendet werden. Durch die Vor-Positionierung des Erodierkopfes 3 mittels der Positionierungs-Anlage 1 wird der Erodierkopf 3 an eine geeignete Stelle der Oberfläche S des zu entfernenden Verbindungselements V gebracht, von der aus der nachfolgende Erosionsprozess starten kann. Die Positionierung des Erodierkopfes 3 und der Erodierprozess können auch abwechselnd mehrmals hintereinander durchgeführt werden. Bei der Durchführung einer Vor-Positionierung des Erodierkopfes 3 mittels der Positionierungs-Anlage 1 wird diese vorteilhafterweise zunächst arretiert, sobald der Erodierkopf eine Soll-Position und Soll-Lage erreicht hat, wobei gegebenenfalls noch Korrekturen während des Erosions-Prozesses erforderlich sein können. Im Zusammenhang mit dieser Vor-Positionierung wird der Erodierkopf 3 vorzugsweise zusätzlich mittels des Rotationsantriebs 6 ausgerichtet, um auch eine geeignete Ausrichtung des Erodierkopfes 3 vor dem Beginn des Erosions-Prozesses zu bewerkstelligen. Diese Vor-Positionierung kann automatisch mittels einer Positions-Sensorik, gegebenenfalls mittels der Bildverarbeitungseinheit 9 sowie mittels der Positions-Steuerung 2 durchgeführt werden oder auch halb-automatisch oder manuell erfolgen.

Im folgenden wird eine zur Durchführung dieser Positionierung optional vorgesehene Erosions-Anlage F an Hand der Figur 1 beschrieben: Am Bohrkopf 4 ist eine mit einer Positions-Steuerung 2 in Verbindung stehende Positions-Sensorik 7 angeordnet, mittels der eine Bestimmung der Lage des Bohrkopfs 4 relativ zum jeweils zu entfernenden Verbindungselement V vornehmbar ist. Die Positions-Sensorik 7 ist vorzugsweise als Flächensensor und insbesondere als Laser-Sensor realisiert und kann zusätzlich eine Videokamera aufweisen. Bei Verwendung einer Videokamera ist der Positions-Sensorik 7 vorzugsweise eine Bildverarbeitungs-Einheit 9 zugeordnet, mit der die Erkennung der Position des Verbindungselements V durch eine verbesserte Erkennung der Verbindungselement-Geometrie verbessert werden kann. Die Steuerung der Positionierungs-Anlage 1 auf der Basis der Daten von der Positions-Sensorik 7 und gegebenenfalls der Bildverarbeitungs-Einheit 9 wird von der Positions-Steuerung 2 durchgeführt. Dabei werden die erforderlichen Parameter zur relativen Ausrichtung des Bohrkopfträgers 4a zum Werkstück W bzw. zum Verbindungselement V durch die Positions-Sensorik 7 erfasst. Bei Verwendung der Bildverarbeitungs-Einheit 9 erfolgt die exakte Positionierung durch eine Bilderkennungs-Sensorik in Form z.B. zumindest eines Kameramoduls, und eines geeigneten Bildverarbeitungssystems, wobei die Bilderkennungs-Sensorik vorzugsweise am Bohrkopfträger 4a befestigt ist. Die Videokamera, sofern sie vorgesehen ist, ist mit einem Kontrollmonitor 9a über ein Video-Signalkabel 9b verbunden. Statt der Videokamera 9 kann jedoch auch jede andere Art einer zweckmäßigen Kontrolleinrichtung zur Kontrolle des Grobpositionierens vorgesehen sein. Der Vorteil bei der Verwendung einer Videokamera ist, dass diese auch zur Kontrolle des nach der Positionierung des Erodierkopfes ablaufenden Erosionsprozesses verwendet werden kann.

Bei der Verwendung von zwei Kameramoduln kann das erste Kameramodul auch unter Verwendung eines separaten Monitors dazu verwendet werden, zunächst eine größere Anzahl von Verbindungselementen oder Verbindern V zur Grob-Orientierung und Vor-Positionierung des Bohrkopfes 4 in bezug auf das Werkstück W zu erfassen. Das zweite Kameramodul wird vorzugsweise dazu verwendet, die einzelnen Verbindungselemente V für das Bildverarbeitungssystem zur Fein-Positionierung des Bohrkopfes 4 optisch zu erfassen. Anhand dieser Bilddaten ermittelt das Bildverarbeitungssystem den Verbindermittelpunkt und bestimmt die Koordinaten, die abgespeichert werden und über die der Bohrkopf jederzeit wieder exakt über dem einmal erfassten Verbinder platziert werden kann.

Bei der Verwendung nur eines Kameramoduls können die beschriebenen Funktionen auch von diesem einen Kameramodul erfüllt werden. Es können jedoch auch mehr als zwei Kameramodule vorgesehen sein, auf die die beschriebenen Funktionen in zweckmäßiger Weise verteilt werden können.

Das zumindest eine Kameramodul kann optional auch zur Kontrolle des chemisch-mechanischen Erosions-Prozesses vorgesehen sein.

Nach einer optional vorgesehenen Positionierung des Erodierkopfes 3 bzw. des Bohrkopfes 4, die beispielsweise mit der beschriebenen Positionieranlage durchgeführt werden kann, erfolgt die eigentliche Entfernung der Verbinder mittels des Erosionsverfahrens bzw. der erfindungsgemäßen Erosions-Anlage F bzw. der Erodier-Einrichtung 10 mit dem Erodierkopf 3 und gegebenenfalls einer stationären Ausrüstung 11. In einem ersten Anwendungsfall bereitet dabei der Erodierkopf 3 das Verbindungselement V durch Schwächung des Schaftes des Verbindungselements V soweit vor, dass dieser im Nachgang durch Ausschlagen oder Herausziehen desselben entfernt werden kann. Dieses Vorgehen ist insbesondere dann vorteilhaft, wenn das Verbindungselement von derjenigen Seite des Werkstücks W für den Erodierprozess zugänglich ist, auf der die Oberfläche S oder der Kopf des Verbindungselementes V sichtbar ist. In einem weiteren Anwendungsfall, in dem diese Zugänglichkeit des zu erodierenden Verbindungsselementes V aus Sicht der Erosions-Anlage nach hinten fehlt, also in dem das Verbindungselement nicht nach hinten ausgeschlagen werden kann, wird vorteilhafterweise der komplette Verbinderschaft durch Erosion zerstört und gegebenenfalls ein Rest des Verbindungselements V nach vorne herausgezogen.

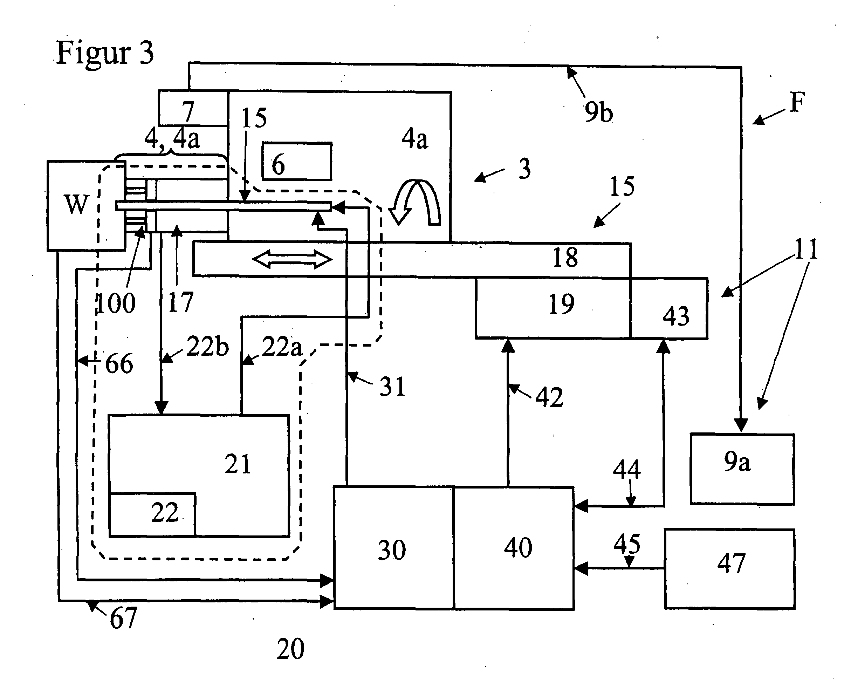

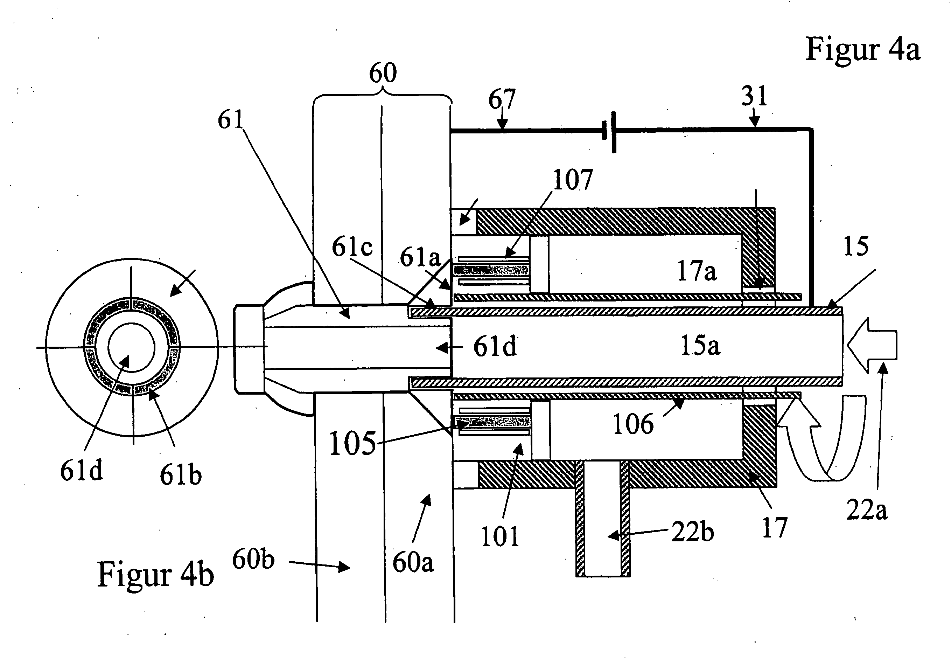

Die Erosions-Anlage F (Figuren 3 und 4a, 4b) umfasst zur Durchführung des eigentlichen Erosions-Prozesses den Erodierkopf 3, der einen Bohrkopf 4 mit einer drehbaren Elektrode 15, eine Masseanschluss-Einrichtung 100 und für den beschriebenen Anwendungsfall einen Spülkäfig 17 aufweist und dem zu dessen Steuerung eine Steuereinheit 40 zugeordnet ist, und eine Sensorik 7 zur Ermittlung der Lage und Position des Bohrkopfes 4 relativ zur Substruktur W oder je nach Anwendungsfall alternativ oder zusätzlich des Verbindungselementes V, wobei zur weiteren Beschreibung jeweils deren Oberflächen F bzw. S als Bezugsflächen verwendet werden. Die Erosions-Anlage F kann insbesondere eine Funken-Erosionsanlage sein. Die Elektrode 15 des Bohrkopfes 4 kann insbesondere eine Rohr-Elektrode sein. Im folgenden wird die Erfindung an Hand einer Rohr-Elektrode beschrieben, jedoch kann die erfindungsgemäße Lösung auch auf andere Verfahren wie z.B. das Senk-Erodierverfahren angewendet werden.

Zur Steuerung des Erodierprozesses ist außerdem eine Erosions-Steuereinheit 40 vorgesehen, die mit der Positions-Steuerung 2 und dadurch mit dem Zustellantrieb 19, der den Vorschub der Rohr-Elektrode 15 in der z-Richtung (Fig. 2) bewerkstelligt, der Sensorik 7 und einer Erosions-Energiequelle 40 zur Herstellung und Aufrechterhaltung des erforderlichen Erosionsstroms funktional in Verbindung steht. Die Positions-Steuerung 2 kann auch funktionaler Bestandteil der Erosions-Steuereinheit 40 sein.

Die Zustellbewegung des Bohrkopfes 4 bei dem Erodierprozess wird vorzugsweise mittels einer dem Bohrkopf 4 zugeordneten linearen Zustelleinheit 15 erreicht, die derart gestaltet ist, dass die Erosions-Achse parallel zur Verlängerung der Zustellachse der linearen Zustelleinheit 5 verläuft. Zur Bewerkstelligung der Drehung der Rohrelektrode 15 ist ein Rotationsantrieb 6 vorgesehen. Der Rotationsantrieb 6 ermöglicht Drehbewegungen des Bohrkopfs 4 um zwei zueinander senkrecht verlaufenden Achsen, in der Darstellung der Fig. 2 um die Vertikal- oder x-Achse und um die Horizontal- oder y-Achse. Durch die Drehung um die x-Achse ergibt sich ein Verstellwinkel α, während sich durch die Drehung um die y-Achse ein Verstellwinkel β des Erodierkopfes 3 ergibt. Die Zustelleinheit 15 ist vorzugsweise zusätzlich zur Positionieranlage 1 vorgesehen, da diese vorteilhafterweise eine Positionierung des Bohrkopfes 4 mit höherer Genauigkeit ermöglicht als üblicherweise mit der Positionieranlage 1 vorgesehen ist. In dem in der Figur 3 dargestellten Ausführungsbeispiel sitzt der Rotationsantrieb 6 mit dem Bohrkopf 4 auf einem Zustell-Schlitten 18 der linearen Zustelleinheit 5, die ferner zu dessen Antrieb einen Zustellantrieb 19 aufweist.

Die Erosions-Steuereinheit 40 ermittelt aufgrund der von der Sensorik 7 zugeführten Daten die Distanz und gegebenenfalls auftretende Schräglagen des Erodierkopfes 3 bzw. Bohrkopfes 4 relativ zum Werkstück. Mittels der Positioniersteuerung 2 in der Erosions-Steuereinheit 40, die vorzugsweise eine entsprechende Regelung aufweist, kann der Erodierkopf 3 in einer Soll-Lage relativ zum Werkstück W bzw. Verbindungselement V gehalten werden. In einer bevorzugten Ausführungsform der Sensorik 7 weist diese speziell angeordnete Laser-Abstandssensoren auf. Die Sensorik 7 sowie die Erosions-Steuereinheit 40 bzw. die Positions-Sensorik 2 ermitteln die Distanz und gegebenenfalls auftretende Schräglagen des Erodierkopfes 3 zum Werkstück. Mittels der Positions-Steuerung 2 bzw. der Erosions-Steuereinheit 40 und vorzugsweise einer entsprechenden Regelung kann der Erodierkopf 3 in einer Soll-Lage relativ zum Werkstück W gehalten werden. Bei einer solchen Regelung wird eine auftretende Schräglage des Werkstückes gegenüber dem Erodierkopf mittels der Sensorik 7 ermittelt, wozu Verfahren nach dem Stand der Technik verwendet werden können. Beispielsweise kann dies bei der Verwendung von drei Laser-Abstandssensoren, die die Eckpunkte eines gleichschenkligen Dreieckes bilden, durch die Bestimmung der Distanz jedes einzelnen Abstandssensors zum Werkstück und mittels trigonometrischer Funktionen erreicht werden, um den Normalenvektor auf der sich durch die drei Distanzen oder Punkte ergebenden Ebene zu ermitteln. Aufgrund der ermittelten Lage und Beabstandung des Erodierkopfes 3 bzw. des Bohrkopfes 4 kann mittels entsprechender Steuerungsfunktionen in der Steuereinheit 40 und einer Ansteuerung des Rotationsantriebs 6 sowie des Zustellantriebs 19 eine Ausrichtung des Erodierkopfes 3 bzw. des Bohrkopfes 4 in Richtung des Normalenvektors erfolgen.

Für den genannten Anwendungsfall der Erosions-Anlage, bei dem die Zugänglichkeit des zu erodierenden Verbindungselementes V aus Sicht der Erosionsanlage nach hinten fehlt, wird im folgenden eine spezielle Ausführungsform beschrieben, bei der ein weiterer Laserabstandssensor (nicht gezeigt in den Figuren), vorzugsweise ein Punktlaser, verwendet wird. Dieser kann in der Positions-Sensorik 7 integriert sein. Mittels dieses Laser-Abstandssensors wird der Bohrkopf 4 relativ zur Verbinder-Oberfläche S ausgerichtet, um beim Erodieren dem Verlauf des Verbinderschafts exakt axial folgen zu können. Der Punktlaser wird mit Hilfe der Positioniersteuerung 2 und Positionieranlage 1 sowie der Erosions-Steuereinheit 40 radial über den Kopf des jeweiligen Verbinderelementes bewegt. Während dieser Bewegung wird der jeweilige Abstand des Punktlasers zum Verbindungselement V gemessen. Mittels eigenem Software Algorithmus und trigonometrischer Funktionen wird der Normalenvektor auf die sich ergebende Ebene (Kreisfläche) ermittelt. Anschließend wird der Erodierkopf in Richtung des Normalenvektors ausgerichtet.

Ein Spülkäfig 17 ist als Bestandteil eines Spülsystems 20 vorgesehen, das ferner eine Filteranlage 21 und eine Pumpe 22 umfasst. Der Spülkäfig 17 (Fig. 4a) schließt einen Innenraum 17a um das in dem Werkstück W sitzende Verbindungselement V in einem Bereich der Rohr-Elektrode 15 ab. Die Elektrode 15 kann drehbar gegenüber dem Spülkäfig 17 sowie gegenüber dem Verbindungselement 61 angeordnet sein und den Spülkäfig 17 durchragen. Der Innenraum 15a der Rohrelektrode 15 wird über die Zuleitung 22a mit Dielektrikum beschickt, das bis zu der der Elektrode 5 zugewandten Oberfläche 61 a bzw. S (Figur 2) des Verbindungselements 61 bzw. V hingeführt wird. Der Spülkäfig 17 wird für den Erosions-Prozess derart angeordnet, dass die Stelle an der Struktur 60, an der das Verbindungselement 61 angeordnet ist, vollständig mit Dielektrikum umspült werden kann. Der Spülkäfig 17 muss also für den Erosions-Prozess das gesamte Verbindungselement 61 auf der Seite der Elektrode 15 umschließen. Mit dieser Variante der vorher dargestellten abgedichteten Punktspülung ist der Erosions-Prozess in beliebiger räumlicher Lage des Werkstücks 60 oder auch des Bohrkopfes 4 durchführbar.

Mit der Pumpe 22 wird das Medium, das als Dielektrikum dient, über eine Zuleitung 22a dem Spülkäfig 17 bzw. dem Raum 17a zugeführt, das aus diesem mittels einer Absaugleitung 22b wiederum der Filteranlage 21 zugeführt werden kann. Die Filteranlage 21 dient zur Reinigung des Dielektrikums, während die Pumpe 22 dazu dient, das Dielektrikum mit ausreichendem Druck über die Elektrode 15 dem Erosionsspalt zuzuführen. Die Unterdruck-Absaugung gewährleistet den vollständigen Abtransport der Abbrand-Partikel. Im Betrieb der Funkenerosions-Anlage ist der Raum 17a nahezu vollständig mit einem Dielektrikum gefüllt. Die Elektrode 15 ist drehbar gegenüber dem Spülkäfig 17 sowie gegenüber dem Verbindungselement 61 angeordnet und durchragt den Spülkäfig 17. Um den Raum 17a gegen den Austritt von Dielektrikum abzudichten, ist zum einen eine Dichtung 62 zwischen dem Spülkäfig 17 und der Elektrode 5 sowie eine Dichtung 63 zum Abdichten des Spülkäfigs 17 gegenüber dem Werkstück W oder der Struktur vorgesehen.

Als Dielektrikum wird vorteilhafterweise ent-ionisiertes Wasser mit einer Leitfähigkeit von vorzugsweise 10 bis 60 µS/cm, jedoch je nach Anwendungsfall auch über diesen Bereich hinaus, verwendet. Die Verwendung von Wasser hat den Vorteil, dass die maximal auftretenden Temperaturen am Verbindungselement und der umgebenden Struktur unter 45 Grad Celsius gehalten werden können.

Die Punktspülung ist im Zusammenhang mit einer erfindungsgemäß vorgesehenen Masse-Kontaktierung am Verbindungselement und der Erosions-Steuereinheit zu sehen, mit der der Erosions-Strom und somit der präzise Ablauf des Erodierverfahrens erreicht wird.

Die Elektrode 15 ist über eine Masseanschluss-Einrichtung 100 mit dem Verbindungselement 61 (Fig. 3 und 4a, 4b) verbunden, die nachstehend im Detail beschrieben wird. In der Figur 3 ist eine derartige optionale Masseanschluss-Einrichtung in Form einer Masseleitung 67 dargestellt.

Die Fig. 4a zeigt einen Zustand, bei dem eine dargestellte Elektrode 15 in Form einer Rohr-Elektrode aufgrund des Erosions-Prozesses bereits Ringnute 61 b im Verbindungselement 61 gebildet hat. Es ist erkennbar, dass sich zwischen der Ringnut 61 b und der Rohr-Elektrode 15 ein Zwischenraum 61 c ausbildet. Das im Innenraum 17a befindliche Dielektrikum strömt durch den Zwischenraum 61 c in den Raum 17a des Spülkäfigs 17, um über die Absaugleitung 22b zur Filteranlage 21 geführt werden zu können. Das aus dem Zwischenraum 61c kommende Dielektrikum führt Abtragmaterial mit sich, das im Erosionsprozess aus dem Verbindungselement 61 entstanden ist. Auf diese Weise wird Abtragmaterial über die Leitung 22b von der Bearbeitungsstelle entfernt.

Die Rohr-Elektrode 15 der dargestellten Ausführungsform wird mittels des Rotationsantriebs 6 für den Erosionsprozess in Drehung versetzt, um ungleichmäßigen Verschleiß der werkstückseitigen Oberfläche der Elektrode zu verhindern. Dies ist insbesondere dann wichtig, wenn die Oberfläche 61 a des Verbindungselements vor dem Erosionsprozess eine unebene, z.B. mit Nuten versehene Oberfläche aufweist. Im Betrieb wird zunächst die Elektrode 15 achsenparallel zum zu lösenden Verbindungselement 61 bzw. flächenorthogonal zur Struktur 60 angesetzt. Dies geschieht über die Sensorik 7, die dazu vorzugsweise als Laserabstandssensorik realisiert ist. Die Rohr-Elektrode 15 wird in Drehung versetzt und die Pumpe 22 eingeschaltet, um den Innenraum 15a der Rohr-Elektrode 15 mit Dielektrikum zu beschicken. Dadurch fließt das Dielektrikum von der Filteranlage 21 über die Zuleitung 22a durch den Innenraum 15a der Rohr-Elektrode und den Zwischenraum 61 c in den Innenraum 17a und anschließend über die Absaugleitung 22b zurück in die Filteranlage 21.

Das Erosions-Steuergerät 40 steht über eine Eingabeleitung 45 mit einem Eingabegerät 47 der Prozess-Steuerung in Verbindung, mit dem Prozessvorgaben in das Steuergerät 40 zur Gestaltung des Erodierverfahrens eingeführt werden können. Das Erosions-Steuergerät 40 sendet Steuersignale an eine Erosions-Energieversorgung 30, mit denen die Stärke und der Verlauf des Erosion- oder Spaltstroms bestimmt und kontrolliert wird, z.B. die Impulslängen, die durchschnittlichen Amplitudenhöhen und Amplituden-Maxima oder die Impulspausen des Erosions-Stroms. Dabei können verschiedene Parameter einfließen, die z.B. aus dem Elektroden-Werkstoff, Werkstück-Material und -Größe oder dem verwendeten Dielektrikum abgeleitet werden. Die vom Erosions-Steuergerät ermittelten Steuervorgaben stellen ein Optimum für den von der Erosions-Energiequelle abzugebenden Strom dar.

Das Erosions-Energiegerät 30 sendet über eine Leitung 31 Erosions-Strom an die Elektrode 15, mit dem der Erosions-Prozess am Werkstück bewirkt wird. Als elektrische Rückleitung ist zumindest eine Masse-Leitung 66 vorgesehen, die mit der erfindungsgemäßen Masseanschluss-Einrichtung 100 in Verbindung steht. Bei der Verwendung der Erfindung für Einsatz-Elemente und insbesondere Verbindungs-Elemente in nicht-metallischen Struktur-Bauteilen oder der Verwendung bei Einsatz-Elementen und insbesondere Verbindungs-Elementen, die in metallische Struktur-Bauteile isoliert gesetzt sind, können zusätzlich auch weitere Masse-Anschlüsse oder -Leitungen 67 aus Sicherheitsgründen, z.B. zur Herstellung einer erforderlichen Redundanz, verwendet werden.

Das Erosions-Energiegerät 30 und das Erosions-Steuergerät 40 steuern dabei auf der Basis der Daten der Sensorik 7 den Erosions-Vorgang, also insbesondere den Erosions-Strom sowie die Lage und Position des Bohrkopfes 4 relativ zum Verbindungs-Element V über eine Kommandoleitung 42, die mit dem Rotationsantrieb 6 und dem Zustellantrieb 19 in Verbindung stehen. Die Einhaltung der jeweils aktuellen Zustellposition kann über eine im Steuergerät 40 integrierte Regelungsfunktion bewirkt werden, die als Regelgröße die Position des Zustell-Schlittens 18, der den Elektrodenvorschub bewirkt, empfängt. Hierzu kann alternativ oder zusätzlich zur Sensorik 7 ein Sensor 43 vorgesehen sein, der die Position des Bohrkopfes 4 auf dem Zustellschlitten 18 abgreift. Mittels der Signalleitung 44 wird die Ist-Position der Linear-Achse bzw. des Bohrkopfes dem Steuergerät 40 zugeführt, das mittels eines Reglers Kommandos für den Zustellantrieb 19 abgibt. Der Sensor 43 kann beispielsweise als Drehgeber gestaltet und mit dem Zustellantrieb 19 verbunden sein.

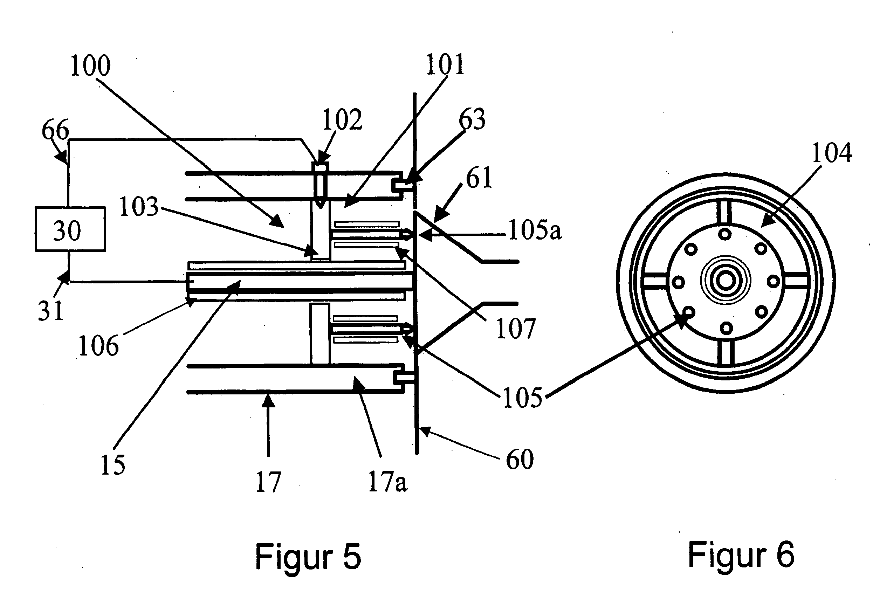

Erfindungsgemäß ist am Erodierkopf 3 eine Masseanschluss-Einrichtung 100 (Figuren 5 und 6) mit mehreren Massekontakt-Elementen 105 vorzugsweise in Form eines Massestiftes angeordnet, die bei einer Positionierung des Erodierkopfes 3 für den Erodiervorgang in Kontaktverbindung mit der Oberseite des Verbindungselements 61 gebracht werden können, um einen Erodier-Stromkreis herzustellen. Die mehreren Massekontakt-Elemente bzw. die mehreren Massestift 105 sind über eine Befestigungs-Vorrichtung 101 mit einer Masseleitung 66 verbunden, die zur Erosions-Energieversorgung 30 führt. Durch die mehreren Massekontakt-Element oder die Massestift 105 wird eine direkte Kontaktierung der Masseleitung 66 mit dem zu bearbeitenden Strukturteil bzw. Einsatz-Element, z.B. dem Kopf eines zu bearbeitenden Verbindungs-Elements V erreicht, um den Stromkreis zur Herstellung des Erosionsstroms zu schließen. Die Beschreibung der Erfindung bezieht sich auf die Verwendung mehrerer Massekontakt-Elemente 105. Die Masseanschluss-Einrichtung 100 kann generell auf verschiedene Weise an dem Bohrkopf 4 angeordnet sein. Im folgenden wird auf eine Anordnung Bezug genommen, bei der die Masseanschluss-Einrichtung 100 an einem Spülkäfig 17 angeordnet ist. Dazu ist vorteilhafterweise ein Träger-Element 103 als Teil der Befestigungs-Vorrichtung 101 vorgesehen, das mechanisch und elektrisch isoliert an dem Spülkäfig 17 angebracht ist und von dem sich die Massekontakt-Element 105 in Richtung zur Oberfläche 61 a des Verbindungselementes 61 hin erstreckt.

Bei der Verwendung mehrerer Massekontakt-Elemente 105 können diese vorteilhafterweise elektrisch parallel geschaltet.

Das zu lösende Verbindungs-Element ist in der Figur 5 mit dem Bezugszeichen 61 und das Werkstück oder das Bauteil oder die Bauteil-Struktur, in dem bzw. in der sich das Verbindungselement 61 befindet, mit dem Bezugszeichen 60 bezeichnet. Das Struktur-Bauteil 60 kann mehrere Strukturteile im Bereich des zu bearbeitenden Einsatz-Elements oder Verbindungs-Elements V umfassen. Beispielsweise kann das Bauteil 60 zweischichtig aus einer Substruktur oder einem Trägerelement und einer darüber liegenden Deckschicht gebildet sein. Das Bauteil kann auch einschichtig oder aus mehr als zwei Schichten im Bereich des Verbindungselements V gebildet sein. Bei Flugzeugstrukturen, bei denen beispielsweise ein Verbindungs-Element 61 in Form eines Nietes zu bearbeiten ist, kann das Bauteil 60 eine Beplankung und eine Substruktur oder eine Trägerstruktur wie z.B. einen Spant in einer Flugzeugstruktur, umfassen.

Die Massekontakt-Elemente oder Massestifte 105 stehen deshalb während des Erodier-Prozesses elektrisch einerseits mit der Masse-Leitung 66 und andererseits mit dem zu bearbeitenden Struktur-Bauteil bzw. mit dem zu erodierenden Einsatz- oder Verbindungs-Element 61 in Verbindung (Figuren 4a, 4b, 5, 6).

In dem besonderen Anwendungsfall, in dem ein Einsatz- oder Verbindungs-Element zu bearbeiten oder zu erodieren ist, das isolierend in einem Struktur-Bauteil eingesetzt ist, wird der Stromfluss dadurch nicht über das Struktur-Bauteil 60 geleitet, sondern ausschließlich über die Elektrode 15 und das Einsatz- oder Verbindungs-Element 61. Dadurch wird erreicht, dass der Erosions-Prozess auf das jeweilige Einsatz- oder Verbindungs-Element 61 beschränkt ist. Die Sicherheit, mit der dieses Ziel erreicht wird, wird verbessert durch die erfindungsgemäßen Maßnahmen zur Erhöhung der Präzision des Erosions-Prozesses mit der Verwendung der Sensorik 7 in Verbindung mit der Erosions-Steuereinheit 40. Bei dem erfindungsgemäßen Erosions-Prozess werden dadurch auch Material- und Gefügeveränderungen in der Struktur oder dem Bauteil in dem Bereich vermieden, der das Verbindungselement 61 umgibt. Dadurch kann das Bauteil nach dem Erodierprozess und insbesondere nach dem Entfernen des jeweiligen Verbindungselements 61 mit sehr großer Sicherheit wiederverwendet werden.

Bei der Anordnung der erfindungsgemäßen Masseanschluss-Einrichtung 100 an einem Spülkäfig 17 wird vorzugsweise ein Trägerelement 103 zur Aufnahme der Massekontakt-Elemente 105 verwendet, der mittels einer Anschluss-Vorrichtung 102 mit dem Spülkäfig 17 verbunden ist. Bei der Verwendung eines Spülkäfigs 17 aus metallischem Werkstoff ist die Anschluss-Vorrichtung 102 isolierend an dem Spülkäfig 17 angebracht. Das Trägerelement 103 kann als Trägerplatte ausgebildet sein, die sich vorzugsweise in radialer Richtung des Spülkäfigs 17 erstreckt. Das Trägerelement 103 weist Spülkanäle oder Spülöffnungen 104 auf, damit das Spülmedium oder das Dielektrikum sowie der Abbrand des Erodierprozesses abgeführt werden können. Die Geometrie der Trägerplatte ist so ausgeführt, dass das Spülmedium und der Abbrand durch die Spülkanäle in Figur 6 ungehindert abgeführt werden können.

Von dem Trägerelement 103 aus erstrecken sich die Massekontakt-Elemente 105 vorzugsweise in der Längsrichtung des Spülkäfigs 17 und somit in Längsrichtung der Rohr-Elektrode 15 und bei der Anwendung auf die Erodierung eines Einsatzoder Verbindungs-Elementes 61 in Richtung auf die Oberfläche F desselben. Die vorzugsweise in Längsrichtung der Elektrode, also parallel verlaufenden Kontaktstifte (siehe Figur 5 und 6) gewährleisten im Verschleißfall eine schnelle Austauschbarkeit.

Die Massekontakt-Elemente 105 sind mit dem Trägerelement 103 elektrisch gut leitend verbunden oder in diesem auf diese Weise verankert. Dies gewährleistet einen minimalen elektrischen Übergangswiderstand, wodurch die Verlustleistung möglichst gering gehalten wird. Vorzugsweise sind das Trägerelement 103 und die Massekontakt-Elemente 105 jeweils eigene Bauteile der Masseanschluss-Vorrichtung 100. Alternativ können diese jedoch auch als ein einheitliches Bauteil vorgesehen sein. Im ersten Fall können im Trägerelement 103 Aufnahmeelemente zur Aufnahme der Massekontakt-Elemente 105 vorgesehen sein. Vorzugsweise wird für das Trägerelement oder die Trägerplatte 103 eine speziell geformte Messingplatte verwendet, an der mehrere Massekontakt-Elemente 105 angebracht sind. Nach der Darstellung der Figuren 5 und 6 wird eine Rohr-Elektrode 15 verwendet, von der sich acht konzentrisch um die Rohr-Elektrode 15 herum angeordnete Massekontakt-Elemente 105 in Form von Massestiften erstrecken.

Bei der Anordnung der erfindungsgemäßen Masseanschluss-Einrichtung 100 an einen Spülkäfig 17 verbindet jedes Massekontakt-Element 105 im Zusammenwirken mit der Anschluss-Vorrichtung 102 und dem Träger-Element 103 das zu bearbeitende Struktur-Bauteil bzw. das zu bearbeitende Verbindungselement V. Der Masseanschluss erfolgt über die Anschluss-Vorrichtung 102 des Trägerelements 103, welche an der Spülkäfig-Gehäusewand 17b befestigt ist. Der pulsförmige Erosionsstrom beträgt bei der erfindungsgemäßen Vorrichtung bzw. dem erfindungsgemäßen Verfahren bis zu 50 A. Um diese hohen Ströme möglichst verlustfrei übertragen zu können, sind die Kontaktstifte über das Trägerelement 103 elektrisch parallel geschaltet.

Die Anzahl der Massekontakt-Elemente 105 ist so bemessen, dass bei Ausfall einzelner Stifte oder vermindertem Kontakt die Stromzufuhr zum Nietkopf jederzeit gewährleistet ist. Dabei werden erfindungsgemäß mindestens 50 bis 100% mehr Massekontakt-Elemente 105 vorgesehen sein, als für eine sichere Kontaktierung notwendig ist. Dies hängt von den Prozess-Bedingungen ab. Beträgt z.B. der Erosionsstrom 50 A und kann angenommen werden, dass pro Stift eine Stromstärke von 10A übertragen werden kann, werden mindestens fünf Massekontakt-Elemente 105 benötigt. In diesem Beispiel sollten dann acht bis zehn Massekontakt-Elemente 105 eingesetzt werden, um bei Ausfall oder Verunreinigung einzelner Stifte eine sichere Stromübertragung zu gewährleisten.

Im Betrieb werden die Massekontakt-Elemente 105 ständig durch das zugeführte Spülmedium gekühlt, wodurch eine thermische Überlastung der Kontakte sicher vermieden wird.

Um einen frühzeitigen Verschleiß der Massekontakt-Elemente 105 durch Kurzschlussverhalten aufgrund von Abbrandpartikeln zwischen Elektrode und Massekontakt-Elementen 105 zu vermeiden, ist die Elektrode 15 mittels einer Isolations-Hülle 106 elektrisch isoliert. Diese Isolations-Hülle 106 dient als nichtleitende Umhüllung und ist vorzugsweise in Form eines Rohres vorteilhafterweise aus Kuststoff ausgeführt. Alternativ oder zusätzlich können die Schäfte der Massekontakt-Elemente 105 mittels einer in Längsrichtung bereichsweisen Ummantelung 106 versehen. Diese umfasst nicht die freien Kontaktenden 105a, die als Kontaktflächen oder -spitzen ausgebildet sein können.

Die freien Kontaktenden 105a der Massekontakt-Elemente 105 sind vorzugsweise durch einen entsprechenden in Längsrichtung der Massekontakt-Elemente 105 wirkenden Anpress-Mechanismus gegen die Oberfläche des zu bearbeitenden Struktur-Bauteils bzw. des Einsatz- oder Verbindungselementes anpressbar. Der Anpress-Mechanismus ist vorzugsweise eine Feder-Anordnung und kann auch z.B. mittels Druckluft, hydraulisch oder elektrisch betrieben werden. Dabei sind die Massekontakt-Elemente 105 einfahrbar gestaltet. Dadurch wird insbesondere bei aufgrund eines Material- oder Fertigungsfehlers nicht-lotrecht gesetzten und verformten Nietköpfen eine sichere Kontaktierung erreicht. Dazu können die Massekontakt-Elemente 105 selbst federnd an dem Trägerelement 103 gelagert sein. Auch kann jedes Massekontakt-Element 105 teleskopartig und mit einer integrierten Feder gebildet sein, so dass die freien Kontaktenden 105a gegen eine Federkraft einfahrbar sind. Durch die gegen eine Federkraft einfahrbaren Kontaktenden 105a wird erreicht, dass die freien Kontaktenden 105a jeder der vorhandenen Massekontakt-Elemente 105 gleichzeitig auf der Oberfläche des zu erodierenden Verbindungselementes 61 anliegen.

Durch die erfindungsgemäß vorgesehene Stromführung und den Masseanschluss am Struktur-Bauteil bzw. dem Verbindungselement 61, gegebenenfalls die Verwendung eines Spülkäfigs aus metallischem oder nicht-metallischem Werkstoff sowie optional eine ringförmige Anordnung der Massekontakt-Elemente 105 wird die EMV-Abstrahlung, d.h. die elektromagnetische Verträglichkeit des Erosions-Stromes, minimiert. Die elektromagnetische Wirkung kann zusätzlich optimiert werden durch eine Minimierung der Längen der Stromzuführungsleitungen. Zusätzlich können die Stromführungsleitungen, die vom Spülkäfig 17 zur Energieversorgung 30 verlaufen von einem Metallgeflecht-Schirm umgeben werden.

Im folgenden wird die Funktionsweise des erfindungsgemäßen Bauteils beim Erosions-Prozess für die Bearbeitung eines metallischen Verbindungs-Elementes V in einem metallischen oder nicht-metallischen Struktur-Bauteil 60 an Hand der Figur 4 beschrieben:

Optional wird mittels einer entsprechenden Sensorik (nicht gezeigt) und vorteilhafterweise auch in Verbindung mit einer entsprechenden Funktion in der Erosions-Steuereinheit 40 der Füllstand des Dielektrikums im Spülsystem 20 kontrolliert. Gegebenenfalls ist ein Nachfüllen des Dielektrikums erforderlich. Weiterhin wird ein in Bezug auf den zu entfernenden Verbindertyp geeigneter Elektrodentyp mit geeignetem Durchmesser in den Bohrkopf 4 eingespannt.

Die Rohr-Elektrode 15 wird auf die der Rohr-Elektrode 15 zugewandten Oberfläche aufgesetzt. Dabei kommen die freien Enden 105a der Masse-Kontaktelemente 105 in Kontakt mit der Oberfläche 61a des zu erodierenden Verbindungselementes 61.

In demselben Arbeitsschritt oder zeitlich vor oder nach dem Aufsetzen der Rohr-Elektrode 15 wird der Spülkäfig 17 mit seiner Dichtung 63 auf die Bauteil-Oberfläche aufgesetzt und mit einem vorbestimmten Anpressdruck an diese angedrückt, so dass die Bauteil-seitige Randfläche des Spülkäfigs 17 die Oberfläche 61 a des Verbindungs-Elementes 61 umgibt (Figur 4). Beim nachfolgenden Erosionsprozess ruht der Spülkäfig 17 in dieser Weise in Anlage mit der Bauteil-Oberfläche, während die Arbeits-Elektrode dynamisch nach vorne, d.h. in das Material des Verbindungselementes 61 geführt wird. Nach dem Aufsetzen des Spülkäfigs 17 dichtet die Dichtung 63 den Innenraum 17a des Spülkäfigs 17 gegenüber der Umgebung ab. Das Aufsetzen der Randfläche bzw. der Dichtung 71a des Spülkäfigs 17 erfolgt in einer Weise, dass die Massekontakt-Elemente 105 in Kontakt mit der Oberfläche 61a des Verbindungselementes 61 gelangen, so dass dieses als Elektrode wirksam wird. Die Anordnung aus dem Spülkäfig 17, der Masseanschluss-Einrichtung 100 und der Rohr-Elektrode wirken mechanisch derart zusammen, dass der Spülkäfig 17 mit der Dichtung 63 erst dann an der Oberfläche des Bauteils 60 zur Anlage kommt, wenn der Bohrkopf mit der Rohr-Elektrode in Arbeitsstellung positioniert worden ist. Anschließend wird das Dielektrikum dem Innenraum 17a zugeführt, also der dann abgedichtete Innenraum 17a mit Dielektrikum gefüllt und die dynamische Spülung oder der Spül-Kreislauf gestartet. Danach wird durch die Erosions-Steuerung 40 und die Erosions-Energiequelle 30 der Erosions-Stromkreislauf aufgebaut.

Der elektro-thermische Erodierprozess wird von der Erosions-Steuerung 40 und der Erosions-Energiequelle 30 gesteuert. Dabei werden im Dielektrikum definierte Spannungsstösse oder Spannungsimpulse erzeugt, um eine teilweise Ionisierung des Dielektrikums verbunden mit einer lokal auftretenden hohen Energiedichte sowie Blitze oder Leitungskanäle in gezielter Weise zu bewirken. Dadurch erfolgt ein Materialabtrag im entsprechenden Verbindungselement 61. Durch die Querschnittsform der Bohr-Elektrode wird eine Ringnut 61 b im Verbindungselement 61 herausgebildet.

Anschließend wird der Bohrkopf 4 mittels der Positionieranlage 1 in Bezug auf das zu entfernende Verbindungselement V bzw. 61 ausgerichtet und die Elektrode 15 gegebenenfalls mit Hilfe der Bildverarbeitungs-Einheit 9 auf die Oberfläche S bzw. 61a des Verbindungselements V bzw. 61 zentriert sowie erforderliche Feinkorrekturen vorgenommen. Daraufhin wird der eigentliche Erosionsprozess durchgeführt.

Die Elektrode 15 erzeugt eine konzentrische Ringnut im Nietkopf. Bei Vorhandensein eines Verbindungselement-Kopfes ist der Durchmesser der verwendeten Rohrelektroden derart vorzusehen, dass die Ringnut bis zum Schaftansatz des zu Erodierenden Verbindungselementes 61 eingebracht werden kann. Der Außendurchmesser der Rohr-Elektrode wird bei üblichen Verbindungselementen vorzugsweise derart gewählt, dass der Außendurchmesser der entstehenden Ringnut vorzugsweise 0,4 bis 0,5 mm kleiner ist als der Durchmesser des Schaftes des Verbindungselementes 61. Der Innendurchmesser der Rohr-Elektrode wird bei üblichen Verbindungselementen vorzugsweise derart gewählt, dass die am Schaftansatz verbleibende Restwandstärke 0,2 bis 0,4 mm beträgt. Dadurch wird gegebenenfalls über eine örtliche Materialversprödung gezielt eine Schwächung des Schaftes des Verbindungselementes erreicht und somit eine Sollbruchstelle hergestellt. Der Nietschaft kann dann vom Nietkopf mittels mechanischem Durchschlag definiert abgetrennt werden, wenn der Erodierprozess zu einem entsprechenden Zeitpunkt gestoppt wird.

Die Arbeits-Elektrode, z.B. die Rohr-Elektrode 15 wird mit vorbestimmter Präzision zentrisch und koaxial zur Längsachse des zu entfernenden Verbindungselementes 61 geführt. Wie voranstehend beschrieben wird dies vorzugsweise erreicht mittels der Sensorik 7 in Verbindung mit der Erosions-Steuereinheit 40 sowie mittels der dem Bohrkopf 4 zugeordneten linearen Zustelleinheit 15, deren Zustellachse parallel zur Verlängerung der Erosionsachse verläuft. Durch die Verwendung einer Rohr-Elektrode 15 als Arbeits-Elektrode erfolgt die elektro-thermische Materialabtragung ausschließlich im Werkstoff des zu entfernenden Verbindungselementes 61. Dadurch wird zusätzlich erreicht, dass das Bauteil im Bereich der Bohrung oder im Sitz des Verbindungselementes 61 nicht verändert wird. Insbesondere wird in diesem Bereich auch eine Gefügeveränderung im Werkstoff des das Verbindungselement umgebenden Bauteils vermieden.

Je nach den Erfordernissen, die im Einzelfall an das Erodierverfahren gestellt werden, kann das Erodierverfahren derart gesteuert werden, dass eine gezielte Schwächung des zu Erodierenden Verbindungselements 61, also die Herstellung einer Sollbruchstelle an demselben, um mit gezielten Abbrechen das Verbindungselement 61 zu entfernen, oder die vollständige Erosionung des Verbindungselementes 61 erreicht wird.

Durch die erfindungsgemäß vorgesehene Rohr-Elektrode 15 und einer Masseverbindung mittels Massekontakt-Elemente, das beim Erodierprozess direkten Kontakt mit dem Kopf des zu lösenden Verbindungselementes hat, wird der Stromkreis am zu erodierenden Verbindungselement 61 selbst geschlossen, d.h. der Stromfluss geht nicht durch die Struktur oder das Bauteil 60, in der bzw. in dem das Verbindungselement 61 verbracht ist. In elektrotechnischer Hinsicht stellt also die Arbeitselektrode, die durch den Erodierprozess die Nut 61 b im Nietkopf abbildet, eine Elektrode und aufgrund der erfindungsgemäßen Massekontaktierung das zu erodierende Verbindungselement eine Gegen-Elektrode dar.

Gegebenenfalls werden teilweise erodierte Verbindungselemente mittels Durchschlag entfernt.

Diese Schritte können an weiteren Verbindungselementen wiederholt werden.

Der Spülkäfig 17 kann auch mittels Unterdruck oder mittels eines HydraulikSystems an das Struktur-Bauteil 60 angedrückt werden.

Anstelle einer Rohr-Elektrode kann die erfindungsgemäße Lösung auch mit anderen Elektroden nach dem Stand der Technik verwendet werden. Insbesondere kommt dabei die Verwendung einer Voll-Elektrode in Betracht.

Die erfindungsgemäße Erosions-Anlage kann zur formgebenden Bearbeitung eines metallischen Struktur-Bauteils verwendet werden, wobei das Struktur-Bauteil ganz oder teilweise in einem Dielektrikum-Bad eingetaucht ist. Dieses kann durch die Verwendung eines Spülkäfigs und einer Zustelleinrichtung bzw. einer Positionierungs-Anlage entfallen. In beiden Fällen kann ein metallisches Einsatz-Element in einem metallischen oder nicht-metallischen Struktur-Bauteil bearbeitet werden, insbesondere zum Entfernen von metallischen Verbindungs-Elementen aus dem Struktur-Bauteil.

## Patentansprüche

1. Erosions-Anlage zur formgebenden Bearbeitung eines metallischen Einsatz- oder Verbindungs-Elementes (V, 61) mittels Erosion umfassend einen Bohrkopf (4) mit einer Rohr-Elektrode (15),
eine Erosions-Energieversorgung (30) und
eine Erosions-Steuerung (40) zur Erzeugung eines Erosionsstroms zur Erosion des Einsatz- oder Verbindungs-Elementes (61), wobei an dem Bohrkopf (4) eine Masseanschluss-Einrichtung (100) mit einem Massekontakt-Element (105) angeordnet ist, das bei einer Positionierung des Bohrkopfes (4) für den Erosions-Prozess in Kontaktverbindung mit der Oberseite des Einsatz- oder Verbindungs-Elementes (61) gebracht werden kann, um einen Erodier-Stromkreis über die Rohr-Elektrode (15) und das zu erodierende Verbindungselement (61) herzustellen,
einen Spülkäfig (17) zur Führung der Rohr-Elektrode (15),
**dadurch gekennzeichnet, dass**
die Masseanschluss-Einrichtung mehrere Massekontakt-Elemente enthält;
ein an dem zylindrisch ausgeführten Spülkäfig (17) angeordnetes Träger-Element (103) zur Aufnahme von den mehreren Massekontakt-Elementen (105) vorgesehen ist,
wobei die Massekontakt-Elemente (103) konzentrisch um die Rohr-Elektrode (15) angeordnet sind und
wobei das Träger-Element (103) als Trägerplatte mit Spülöffnungen (104) zur Durchleitung eines in den Innenraum (17a) des Spülkäfigs (17) zugeführten Dielektrikums ausgeführt ist und die Trägerplatte sich in radialer Richtung des Spülkäfigs (17) erstreckt.

2. Erosions-Anlage nach dem Patentanspruch 1, **dadurch gekennzeichnet, dass** ein Mechanismus vorgesehen ist, durch den die freien Kontaktenden (105a) des zumindest einen Massekontakt-Elements (105) entgegen einer Federkraft einfahrbar sind.

3. Erosions-Anlage nach einem der voranstehenden Patentansprüche, **dadurch gekennzeichnet, dass** die Massekontakt-Elemente (105) elektrisch parallel geschaltet sind.

4. Erosions-Anlage nach einem der voranstehenden Patentansprüche, **dadurch gekennzeichnet, dass** die Schäfte der Massekontakt-Elemente (105) vorzugsweise mit Schrumpfschlauch, elektrisch isoliert sind.

5. Erosions-Anlage nach einem der voranstehenden Patentansprüche, **dadurch gekennzeichnet, dass** sich die Massekontakt-Elements (105) in Richtung zur Oberfläche (61 a) des Verbindungselements (61) hin erstrecken

6. Erosions-Anlage nach einem der voranstehenden Patentansprüche, **dadurch gekennzeichnet, dass** die Massekontakt-Elemente (105) in Längsrichtung der Rohr-Elektrode (15) verlaufen.

7. Erosions-Anlage nach einem der voranstehenden Patentansprüche, **dadurch gekennzeichnet, dass** die Trägerplatte (103) aus Messing gebildet ist.

## Claims

1. Electro-erosion machining apparatus for shape machining a metallic insert or connecting element (V, 61) by means of electro-erosion, comprising a drilling head (4) with a tubular electrode (15),
an electro-erosion energy supply (30) and
an electro-erosion control (40) for generating an electro-erosion current for the electro-erosion of the insert or connecting element (61), wherein an earth connection device (100) having an earth contact element (105) is arranged on the drilling head (4), which earth contact element (105), during positioning of the drilling head (4) for the electro-erosion process, can be brought into contact with the top side of the insert or connecting element (61) in order to produce an electro-erosion electric circuit via the tubular electrode (15) and the connecting element (61) to be eroded,
a flushing cage (17) for guiding the tubular electrode (15),
**characterized in that**
the earth connection device contains a plurality of earth contact elements;
a support element (103) arranged on the cylindrical flushing cage (17) for accommodating the plurality of earth contact elements (105) is provided,
wherein the earth contact elements (103) are arranged concentrically around the tubular electrode (15), and wherein the support element (103) is designed as a support plate having flushing openings (104) for passing through a dielectric fed into the interior space (17a) of the flushing cage (17), and the support plate extends in the radial direction of the flushing cage (17).

2. Electro-erosion machining apparatus according to Claim 1, **characterized in that** a mechanism is provided by means of which the free contact ends (105a) of the at least one earth contact element (105) can be retracted against a spring force.

3. Electro-erosion machining apparatus according to either of the preceding claims, **characterized in that** the earth contact elements (105) are electrically connected in parallel.

4. Electro-erosion machining apparatus according to one of the preceding claims, **characterized in that** the shanks of the earth contact elements (105) are preferably electrically insulated with a heat-shrinkable sleeve.

5. Electro-erosion machining apparatus according to one of the preceding claims, **characterized in that** the earth contact elements (105) extend towards the surface (61a) of the connecting element (61).

6. Electro-erosion machining apparatus according to one of the preceding claims, **characterized in that** the earth contact elements (105) run in the longitudinal direction of the tubular electrode (15).

7. Electro-erosion machining apparatus according to one of the preceding claims, **characterized in that** the support plate (103) is formed from brass.

## Revendications

1. Équipement d'érosion pour l'usinage de façonnage d'un élément d'insertion ou de liaison (V, 61) métallique au moyen de l'érosion, comprenant une tête de perçage (4) munie d'une électrode tubulaire (15),
une source d'énergie d'érosion (30) et
une commande d'érosion (40) pour générer un courant d'érosion pour l'érosion de l'élément d'insertion ou de liaison (61), un dispositif de raccordement de la masse (100) muni d'un élément de contact de masse (105) étant disposé sur la tête de perçage (4), lequel peut être amené en liaison de contact avec le côté supérieur de l'élément d'insertion ou de liaison (61) lors d'un positionnement de la tête de perçage (4) pour le processus d'érosion afin d'établir un circuit électrique d'érosion par le biais de l'électrode tubulaire (15) et l'élément de liaison (61) à éroder, une cage de rinçage (17) pour guider l'électrode tubulaire (15),
**caractérisé en ce que**
le dispositif de raccordement de la masse comprend plusieurs éléments de contact de masse,
il est prévu un élément porteur (103) disposé sur la cage de rinçage (17) de configuration cylindrique pour accueillir les plusieurs éléments de contact de masse (105),
les éléments de contact de masse (103) étant disposés de manière concentrique autour de l'électrode tubulaire (15) et
l'élément porteur (103) étant réalisé sous la forme d'une plaque porteuse munie d'ouvertures de rinçage (104) pour laisser passer un diélectrique acheminé dans l'espace intérieur (17a) de la cage de rinçage (17) et la plaque porteuse s'étendant dans le sens radial de la cage de rinçage (17).

2. Équipement d'érosion selon la revendication 1, **caractérisé en ce qu'**il est prévu un mécanisme par le biais duquel les extrémités de contact (105a) libres de l'au moins un élément de contact de masse (105) peuvent être introduites en s'opposant à la force d'un ressort.

3. Équipement d'érosion selon l'une des revendications précédentes, **caractérisé en ce que** les éléments de contact de masse (105) sont branchés électriquement en parallèle.

4. Équipement d'érosion selon l'une des revendications précédentes, **caractérisé en ce que** les tiges des éléments de contact de masse (105) sont isolées électriquement, de préférence avec une gaine rétractable.

5. Équipement d'érosion selon l'une des revendications précédentes, **caractérisé en ce que** les éléments de contact de masse (105) s'étendent en direction de la surface (61a) de l'élément de liaison (61).

6. Équipement d'érosion selon l'une des revendications précédentes, **caractérisé en ce que** les éléments de contact de masse (105) s'étendent dans le sens longitudinal de l'électrode tubulaire (15).

7. Équipement d'érosion selon l'une des revendications précédentes, **caractérisé en ce que** la plaque porteuse (103) est réalisée en laiton.
